# EUROPEAN PATENT APPLICATION

(11) **EP 4 610 779 A1**
(43) Date of publication of application: **03.09.2025**
(21) Application number: 25161040.8
(22) Date of filing: 28.02.2025
(51) Int. Cl.: G06F 1/26, G06F 1/3234

(54) **INFORMATION PROCESSING APPARATUS CAPABLE OF SUPPRESSING POWER CONSUMPTION IN THE INFORMATION PROCESSING APPARATUS ACCORDING TO USAGE STATE OF THE INFORMATION PROCESSING APPARATUS, CONTROL METHOD FOR INFORMATION PROCESSING APPARATUS, STORAGE MEDIUM, AND PROGRAM**

(30) Priority: 01.03.2024 JP 2024031146
(71) Applicant: CANON KABUSHIKI KAISHA, Tokyo 146-8501 (JP)
(72) Inventor: SASAHARA, Naoto, Tokyo, 146-8501 (JP)
(74) Representative: Canon Europe Limited

(57) **Abstract**

An information processing apparatus (101) capable of suppressing power consumption according to a usage state is provided. The information processing apparatus includes a power control unit (340) that performs switching control for switching between a first power state and a second power state, an operation section (500) by which a selection operation that selects enabling or disabling use of a USB device (407) is performed, and a determining unit (340) that determines whether the information processing apparatus is in a connected state or in an unconnected state. The determining unit, even in a case that the USB device is connected to the information processing apparatus and the use of the USB device becomes possible and when the disabling has been selected, determines that the information processing apparatus is in the unconnected state. The power control unit, when being determined that the information processing apparatus is in the unconnected state, switches to the second power state.

## Description

### TECHNICAL FIELD

The present invention relates to an information processing apparatus, a control method for the information processing apparatus, a storage medium, and a program.

### BACKGROUND OF THE INVENTION

### Description of the Related Art

An image forming apparatus can be configured in a plurality of standby states. The standby states include, for example, a ready state, a sleep state, and an off state. The ready state is a state in which the image forming apparatus is waiting for input of an instruction for a copy function, a print function, or the like, while the temperature inside the image forming apparatus is rising. The sleep state is a standby state in which the image forming apparatus is not used by a user and power consumption (standby power) is reduced. The off state is a state in which the image forming apparatus is not capable of being used immediately, but the power consumption is the lowest. In addition, the image forming apparatus has a power saving function for transitioning from each standby state to a lower power consumption state. This power saving function enables each component (each part) of the image forming apparatus to operate while the image forming apparatus is configured in a standby state with low power consumption. For example, Japanese Laid-Open Patent Publication (kokai) No. 2015-133636 describes an apparatus that performs a specified display in the case that no operation is performed for a specified automatic stop time, and further turns off a power supply of the apparatus (i.e., automatically shuts down the power supply of the apparatus) in the case that no operation is accepted. In the apparatus disclosed in Japanese Laid-Open Patent Publication (kokai) No. 2015-133636, it is possible to suppress power consumption by automatic shutdown. In addition, in the apparatus disclosed in Japanese Laid-Open Patent Publication (kokai) No. 2015-133636, it is possible to record information regarding the automatic shutdown and change (manage) the time for the automatic shutdown.

However, in the apparatus disclosed in Japanese Laid-Open Patent Publication (kokai) No. 2015-133636, for example, in the case of determining a connected state (e.g., an available state) of a USB device, there is a risk that the determination may be made simply based on whether the USB device has been connected to a USB port of the apparatus. In this case, even if there is no intention to use the USB device, it is determined that the USB device is in the connected state and supplying power to the USB device will be performed, resulting in a waste of power consumption. As described above, with the apparatus disclosed in Japanese Laid-Open Patent Publication (kokai) No. 2015-133636, depending on the usage state of the apparatus, the effect of reducing power consumption may not be obtained.

### SUMMARY OF THE INVENTION

The present invention provides an information processing apparatus capable of suppressing power consumption in the information processing apparatus according to a usage state of the information processing apparatus. According to embodiments of the invention there is provided a control method for the information processing apparatus, a storage medium, and a program.

Accordingly, a first aspect of the present invention provides an information processing apparatus as specified in claims 1 to 14.

Accordingly, a second aspect of the present invention provides a control method for controlling an information processing apparatus as specified in claim 15.

Accordingly, a third aspect of the present invention provides a non-transitory computer-readable storage medium as specified in claim 16.

Accordingly, a fourth aspect of the present invention provides a computer program product as specified in claim 17.

According to the present invention, it is possible to suppress the power consumption in the information processing apparatus according to the usage state of the information processing apparatus.

Further features of the present invention will become apparent from the following description of example embodiments with reference to the attached drawings.

### BRIEF DESCRIPTION OF THE DRAWINGS

FIG. 1 is a block diagram that shows an example of a hardware configuration of an image forming system that includes an image forming apparatus in the case of having been applied as an information processing apparatus.
FIG. 2 is a block diagram that shows an example of a hardware configuration of a controller included in the image forming apparatus.
FIG. 3 is a block diagram that shows an example of a configuration for power control of the image forming apparatus.
FIG. 4 is a block diagram that shows an example of a hardware configuration of a USB device controller, the USB device controller being included in the image forming apparatus and/or its peripherals.
FIG. 5 is a diagram that shows an example of a setting screen displayed on an operation unit, the operation unit being included in the image forming apparatus.
FIG. 6 is a flowchart that shows a startup processing of the USB device controller when the image forming apparatus is started.
FIG. 7 is a flowchart that shows a processing for switching between enabling and disabling a USB device function on the setting screen shown in FIG. 5.
FIG. 8 is a flowchart that shows an offline timer processing for automatically shutting down the image forming apparatus.
FIG. 9 is a flowchart that shows a detailed process performed in a step S804 of the flowchart shown in FIG. 8.

### DESCRIPTION OF THE EMBODIMENTS

The present invention will now be described in detail below with reference to the accompanying drawings showing embodiments thereof.

Hereinafter, an example embodiment of the present invention will be described in detail with reference to the drawings. However, the configuration described in the following embodiment is merely an example, and the scope of the present invention is not limited by the configuration described in the following embodiment. For example, each unit (each component) constituting the present invention is able to be replaced with a unit (a component) with any configuration that is capable of performing the same function. In addition, any component(s) may be added.

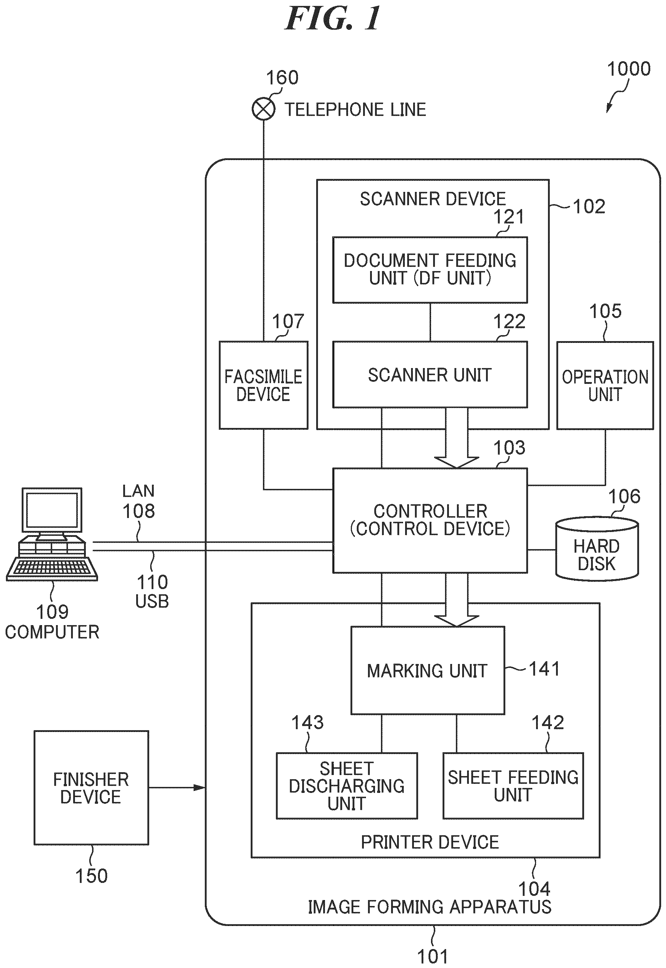

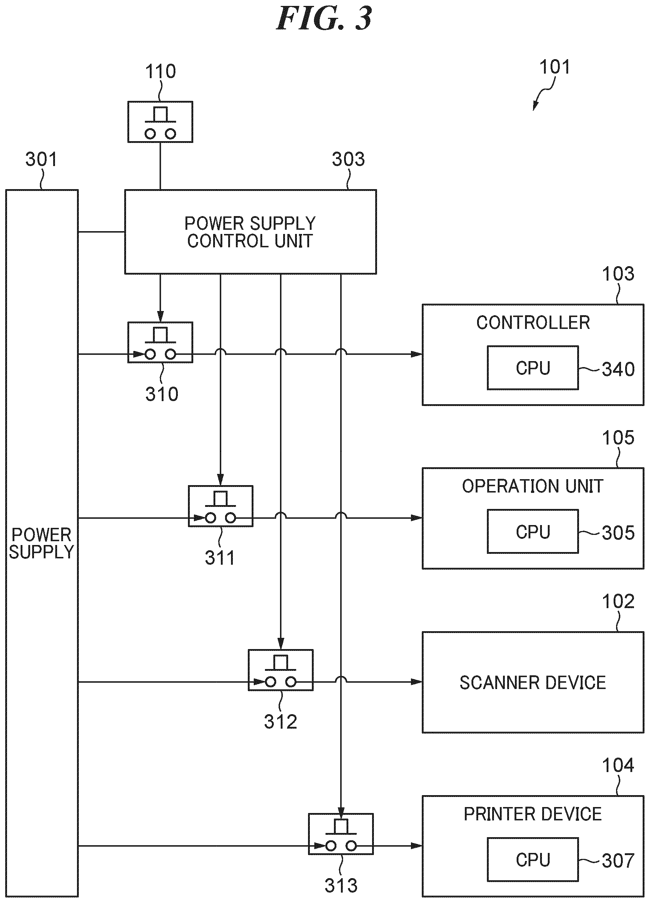

FIG. 1 is a block diagram that shows an example of a hardware configuration of an image forming system that includes an image forming apparatus in the case of having been applied as an information processing apparatus. As shown in FIG. 1, an image forming system 1000 includes an image forming apparatus 101, a computer 109, and a finisher device 150. In the present embodiment, the image forming apparatus 101 is a multi-function peripheral (an MFP) that has a print function, a scanner function, a data communication function, etc., but is not limited to be an MFP. In addition, the image forming apparatus 101 is configured to be able to be in a first power state in which the image forming apparatus 101 is supplied with power and is operated, and a second power state in which power consumption is lower than that of the first power state. The power states of the image forming apparatus 101 include, for example, a normal state, a ready state, a sleep state, an off state, and a shutdown state. "The normal state" refers to a state in which it is possible to quickly execute desired functions such as the print function, the scanner function, the data communication function, etc. "The ready state" refers to a state in which the image forming apparatus 101 is waiting for input of an instruction for a copy function, the print function, or the like, while the temperature inside the image forming apparatus 101 is rising. "The sleep state" refers to a standby state in which the image forming apparatus 101 is not used by a user and the power consumption (standby power) is reduced. "The off state" refers to a state in which the image forming apparatus 101 is not capable of being used immediately, but the power consumption is the lowest compared to the ready state and the sleep state (the least amount of power is used compared to the ready state and the sleep state). "The shutdown state" refers to a state in which a power supply 301 (see FIG. 3) of the image forming apparatus 101 has been turned off, that is, power supplying from the power supply 301 has been cut off. In the present embodiment, for example, the normal state, the ready state, the sleep state, and the off state are treated as the first power state, and the shutdown state is treated as the second power state, but the present invention is not limited to this kind of treatment.

The image forming apparatus 101 includes a scanner device 102, a controller (a control device) 103, a printer device 104, an operation unit (a display unit) 105, a hard disk (a hard disk drive (an HDD)) 106, and a facsimile device 107. The scanner device 102 optically reads an image from a document and converts it into a digital image. In the present embodiment, the scanner device 102 includes a document feeding unit (a DF unit) 121 and a scanner unit 122. The document feeding unit 121 is able to automatically and sequentially replace bundles of documents. The scanner unit 122 optically scans the document and converts it into image data (the digital image) of the document. This image data is transmitted to the controller 103. The printer device 104 prints the image data on sheets (printing sheets). In the present embodiment, the printer device 104 includes a marking unit 141, a sheet feeding unit 142, and a sheet discharging unit 143. The sheet feeding unit 142 sequentially supplies sheets one by one from a bundle of sheets to the marking unit 141. The marking unit 141 prints the image data on the sheets that have been supplied from the sheet feeding unit 142. The sheet discharging unit 143 discharges the printed matter (the printed sheets) on which the image data has been printed.

The operation unit 105 includes a touch panel, hard keys, and the like for accepting settings for the image forming apparatus 101 from the user and displaying the processing status of the image forming apparatus 101. In addition, as a function for accepting the settings for the image forming apparatus 101 from the user, for example, the operation unit 105 is capable of being provided with setting switches for enabling or disabling a given setting (e.g., a setting switch may be provided to enable or disable each of the suspend, hibernation, and hybrid sleep settings). In addition, the operation unit 105 is able to refer to, from an application, flag(s) that have been set. The hard disk 106 is a nonvolatile storage device such as a solid state drive (an SSD) or an embedded multi-media card (an eMMC) that stores, for example, the image data, control programs, etc. The control programs include, for example, programs or the like for causing the controller 103 (a computer) to execute the respective units of the image forming apparatus 101 and the respective means of the image forming apparatus 101 (a control method for the information processing apparatus). The facsimile device 107 is able to transmit various types of information to a telephone line 160 or the like, and is able to receive various types of information from the telephone line 160 or the like. The controller 103 is a computer that is communicably connected to the scanner device 102, the printer device 104, the operation unit 105, the hard disk 106, and the facsimile device 107, and controls the operations of these units (the scanner device 102, the printer device 104, the operation unit 105, the hard disk 106, and the facsimile device 107). The controller 103 is able to execute various kinds of jobs such as a print job by controlling the operations of these units.

Examples of jobs (functions) that can be executed by the image forming apparatus 101 include the copy function, an image transmission function, an image storage function, and an image printing function. "The copy function" is a function for recording image data that has been read by the scanner device 102 onto the hard disk 106 and for performing printing of the image data by the printer device 104. "The image transmission function" is a function for transmitting the image data that has been read by the scanner device 102 to the computer 109 via a local area network (a LAN) 108. "The image storage function" is a function for recording the image data that has been read by the scanner device 102 onto the hard disk 106, and for performing image data transmission or image data printing as necessary. "The image printing function" is a function for analyzing language data (for example, a page description language) that has been transmitted from the computer 109 and printing the language data by the printer device 104.

The image forming apparatus 101 is communicably connected to the computer 109 via the LAN 108. As a result, the image forming apparatus 101 is able to receive various kinds of jobs from the computer 109, and is able to transmit and receive image data to and from the computer 109. It should be noted that although the number of computers connected to the image forming apparatus 101 is one in the configuration shown in FIG. 1, the number of computers connected to the image forming apparatus 101 is not limited to one and may be, for example, two or more. In addition, the image forming apparatus 101 and the computer 109 are also capable of being communicably connected to each other via a universal serial bus (a USB) 110. In this case, the image forming apparatus 101 functions as a USB device. The finisher device 150 performs various kinds of processes, such as sorting, stapling, punching holes, and cutting, with respect to the printed matter (the printed sheets) outputted from the sheet discharging unit 143 of the printer device 104 of the image forming apparatus 101.

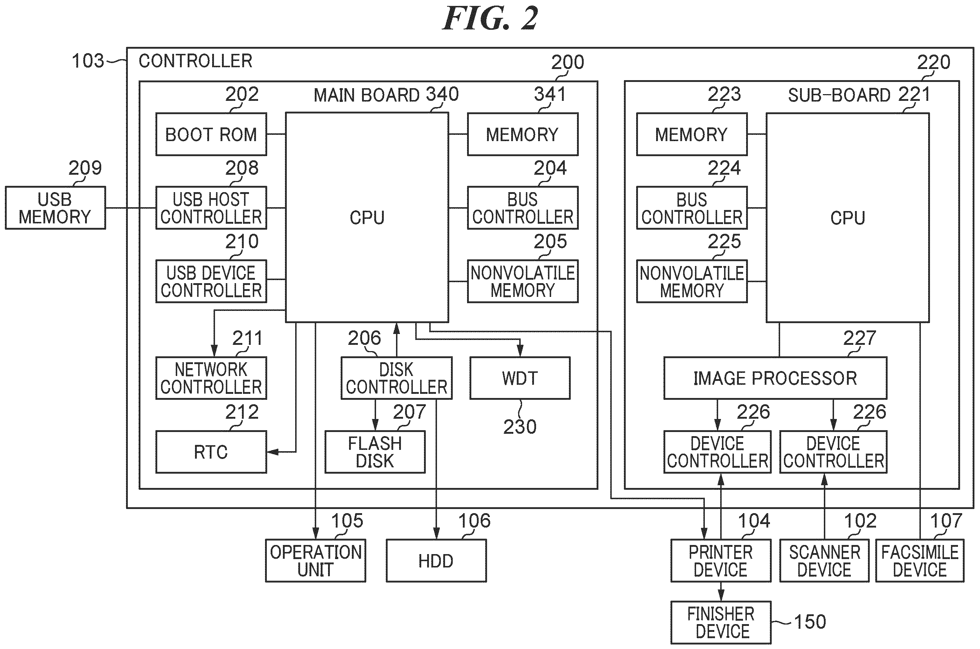

FIG. 2 is a block diagram that shows an example of a hardware configuration of the controller included in the image forming apparatus. As shown in FIG. 2, the controller 103 includes a main board 200 and a sub-board 220. The main board 200 is a general-purpose CPU system, and includes a boot ROM 202, a bus controller 204, a nonvolatile memory 205, a disk controller 206, and a flash disk 207. In addition, the main board 200 includes a USB host controller 208, a USB device controller 210, a network controller 211, a real time clock (an RTC) 212, a watchdog timer (a WDT) 230, a central processing unit (a CPU) 340, and a memory 341. These modules on the main board 200 are communicably connected to each other.

The boot ROM 202 stores a boot program. The bus controller 204 has a bridge function with an external bus. The nonvolatile memory 205 is a memory in which data is not lost even in the case that the power supply has been cut off. The disk controller 206 controls a storage device. The flash disk 207 is a relatively small-capacity storage device made up of a semiconductor device, and is made up of, for example, an SSD or an eMMC. The USB host controller 208 functions as a USB host. The USB device controller 210 is a controller that enables the image forming apparatus 101 to function as a USB device. The network controller 211 transmits and receives data to and from the computer 109 via the LAN 108. It should be noted that although the number of network controllers 211 arranged in the configuration shown in FIG. 2 is one, the number of network controllers 211 arranged is not limited to one, and may be, for example, two or more. In addition, the network controller 211 may be capable of controlling a wireless LAN. In addition, the network controller 211 may be connected to the USB host controller 208. The RTC 212 sets a current time and a return time. The watchdog timer 230 resets the controller 103. The CPU 340 controls the modules such as the boot ROM 202, etc., that is, controls the entire main board 200. It should be noted that the CPU 340 includes a large number of hardware components, such as a chip set, a bus bridge, and a clock generator. The memory 341 is used as a working memory for the CPU 340. A USB memory 209, the operation unit 105, the hard disk 106, etc. are communicably connected to the main board 200.

The sub-board 220 is configured with a relatively small general-purpose CPU system and image processing hardware. The sub-board 220 includes a CPU 221, a memory 223, a bus controller 224, a nonvolatile memory 225, device controllers 226, and an image processor 227, which are connected to each other so as to be able to communicate with each other. The CPU 221 controls the modules such as the memory 223, etc., that is, controls the entire sub-board 220, and the CPU 221 also controls the facsimile device 107. It should be noted that similar to the CPU 340, the CPU 221 includes a large number of hardware components, such as a chip set, a bus bridge, and a clock generator. The memory 223 is used as a working memory for the CPU 221. The bus controller 224 has a bridge function with an external bus. The nonvolatile memory 225 is a memory in which data is not lost even in the case that the power supply has been cut off. In the present embodiment, the two device controllers 226 are provided. The scanner device 102 is communicably connected to one of the two device controllers 226. As a result, it is possible to perform transmission of image data from the scanner device 102 to the sub-board 220. In addition, the printer device 104 is communicably connected to the other of the two device controllers 226. As a result, it is possible to perform transmission of image data from the sub-board 220 to the printer device 104. The image processor 227 performs digital image processing in real time.

FIG. 3 is a block diagram that shows an example of a configuration for power control of the image forming apparatus. As shown in FIG. 3, as a power control configuration, the image forming apparatus 101 includes the power supply 301, a power supply control unit 303, a first power switch 310, a second power switch 311, a third power switch 312, a fourth power switch 313, and a power switch 110. The power supply 301, the first power switch 310, the second power switch 311, the third power switch 312, the fourth power switch 313, and the power switch 110 are connected to the power supply control unit 303. In addition, as described above, the image forming apparatus 101 includes the scanner device 102, the controller 103, the printer device 104, and the operation unit 105. The scanner device 102 is connected to the power supply 301 and the power supply control unit 303 via the third power switch 312. The controller 103 is connected to the power supply 301 and the power supply control unit 303 via the first power switch 310. The printer device 104 is connected to the power supply 301 and the power supply control unit 303 via the fourth power switch 313. The operation unit 105 is connected to the power supply 301 and the power supply control unit 303 via the second power switch 311. The CPU 340 is built in the controller 103. A CPU 307 is built in the printer device 104. A CPU 305 is built in the operation unit 105.

The power supply control unit 303 is constantly supplied with power from the power supply 301 via a power supply line. It should be noted that when the power supply is turned off, only the power supply control unit 303 is energized and the power control is performed. This makes it possible to reduce the power consumption to a minimum. In the image forming apparatus 101, when the power switch 110 which is a main power switch has been operated, that is, has been pressed down, the power supply control unit 303 detects the operation of the power switch 110. Then, the power supply control unit 303 controls the first power switch 310 to supply power to the CPU 340 of the controller 103, that is, controls the first power switch 310 to supply power from the power supply 301 to the CPU 340 of the controller 103. Similarly, the power supply control unit 303 controls the second power switch 311 to supply power to the CPU 305 of the operation unit 105, controls the third power switch 312 to supply power to the scanner device 102, and controls the fourth power switch 313 to supply power to the CPU 307 of the printer device 104.

It should be noted that the CPU 340 of the controller 103 is able to control the second power switch 311 by a notification to the power supply control unit 303 to supply power individually to the CPU 305 of the operation unit 105. Similarly, the CPU 340 is able to, by a notification to the power supply control unit 303, control the third power switch 312 to supply power individually to the scanner device 102, or control the fourth power switch 313 to supply power individually to the printer device 104. In addition, the power supply control unit 303 or the CPU 340 is also able to perform power supplying control with respect to the marking unit 141, the sheet feeding unit 142, and the sheet discharging unit 143 of the printer device 104. In addition, power supplying for each block is also able to be realized by, for example, configuring the first power switch 310 with two systems, and in the sleep state, turning off only one relay switch connected to the block that turns off the power supply 301, and leaving the other relay switch on. In addition, in the shutdown state, the relay switches of both systems are turned off. In this case, the power supply control signal is not a binary signal but a multi-value control signal according to the energized state. In each power state, such as the sleep state or the shutdown state, power supplying is performed through such control. In addition, in this control, the power supply control unit 303 may perform multi-value control of the first power switch 310 to supply power to each block connected to the controller 103. In addition, in this control, the CPU 340 of the controller 103 may perform multi-value control of the first power switch 310 by a notification to the power supply control unit 303 to supply power to each block connected to the controller 103.

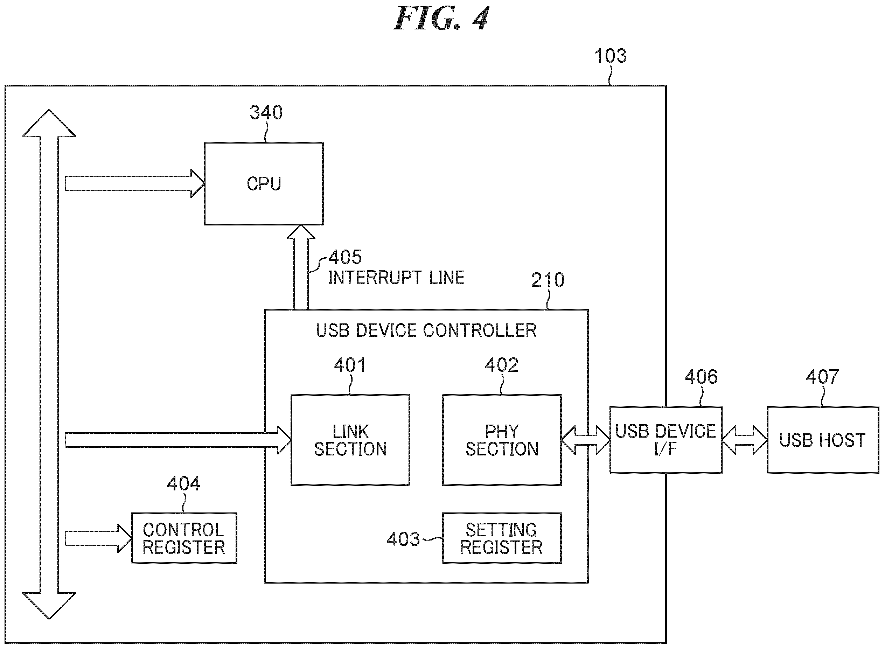

FIG. 4 is a block diagram that shows an example of a hardware configuration of the USB device controller included in the image forming apparatus and its peripherals. As shown in FIG. 4, the USB device controller 210 includes a LINK section 401, a PHY section 402, and a setting register 403. The LINK section 401 is a part within the USB device controller 210 to be controlled by the CPU 340. The PHY section 402 is a part connected to an external USB host (a USB device) 407 via a USB device interface (a USB device I/F) 406. It should be noted that the USB host 407 is attachably and detachably connected to the USB device I/F 406. In addition, in the present embodiment, the USB host 407 is the computer 109 or the USB memory 209 that is capable of being connected via the USB 110, but is not limited to be the computer 109 or the USB memory 209, and may be, for example, a USB device configured to be connectable via USB such as a USB cable. The setting register 403 stores setting information for functioning as a USB device. For example, communication with the USB host 407, settings for the USB device controller 210, etc., are performed by a USB device driver controlled by the CPU 340 executing commands such as writing into the LINK section 401, reading into the LINK section 401, etc. A control register 404 outside the USB device controller 210 is a control register that exists so that the CPU 340 is able to reset the USB device controller 210. When the USB device controller 210 is connected to the USB host 407 via the USB device I/F 406, the USB device controller 210 detects the power supplying from a VBUS line. Then, the USB device controller 210 notifies the CPU 340 via an interrupt line 405 of an interrupt indicating that the VBUS line is in an ON state. In addition, at this time, data indicating that the VBUS line is in the ON state is stored in the setting register 403. In addition, depending on the type of the USB host 407, power supplying is performed from the USB device controller 210 to the USB host 407.

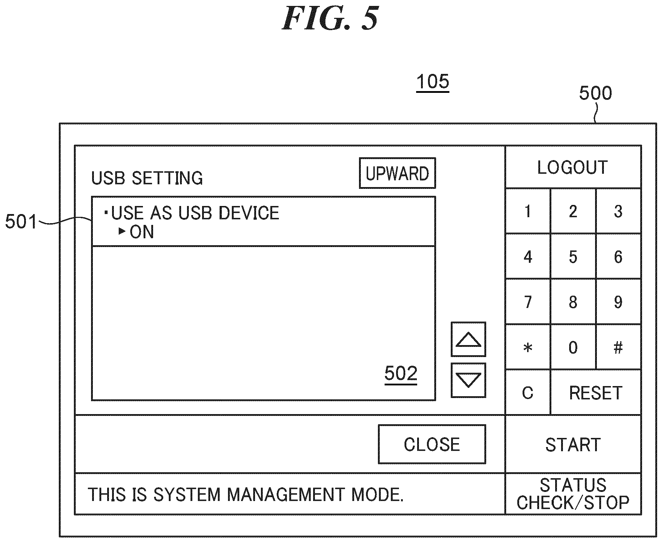

FIG. 5 is a diagram that shows an example of a setting screen displayed on the operation unit included in the image forming apparatus. A setting screen (an operation screen) 500 shown in FIG. 5 is displayed on the operation unit 105 of the image forming apparatus 101. The setting screen 500 includes a setting (an operation section) 501. By using the setting 501, a selection operation for switching between enabling and disabling a USB device function in the image forming apparatus 101 is performed, that is, a selection operation for selecting an "ON" state that enables the use of the USB host 407 in the image forming apparatus 101, or an "OFF" state that disables the use of the USB host 407 in the image forming apparatus 101 is performed (an operation step). The CPU 340 is able to store the setting state on the setting screen 500 in a storage device (a storage unit) such as the HDD 106, the nonvolatile memory 205, or the flash disk 207.

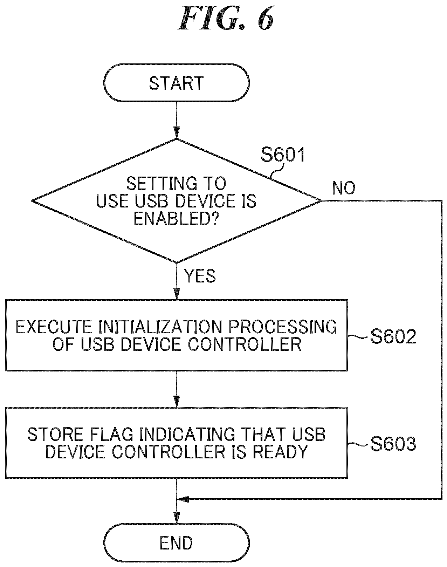

FIG. 6 is a flowchart that shows a startup processing of the USB device controller when the image forming apparatus is started. As shown in FIG. 6, in a step S601, the CPU 340 reads out the setting state on the setting screen 500 that has been stored in the storage device, and determines whether or not the setting 501 of the setting screen 500 is enabled. As a result of the determination in the step S601, in the case of being determined that the setting 501 is enabled (YES in the step S601), the startup processing proceeds to a step S602. On the other hand, as the result of the determination in the step S601, in the case of being determined that the setting 501 is not enabled, that is, that the setting 501 is disabled (NO in the step S601), the startup processing ends.

In the step S602, the CPU 340 executes an initialization processing of the USB device controller 210. The initialization processing is a processing that performs writing descriptor information into the setting register 403, and the like. By executing this initialization processing, a preparation for performing communication between the USB device controller 210 and the USB host 407 is completed. After the step S602 is executed, the startup processing proceeds to a step S603.

In the step S603, the CPU 340 stores, in the memory 341, a flag indicating that the preparation for communication between the USB device controller 210 and the USB host 407 is completed, that is, a flag indicating information that the use of the USB host 407 in the image forming apparatus 101 is possible (the USB host 407 is capable of being used in the image forming apparatus 101). It should be noted that this flag is generated, for example, by the CPU 340 (an information generating unit).

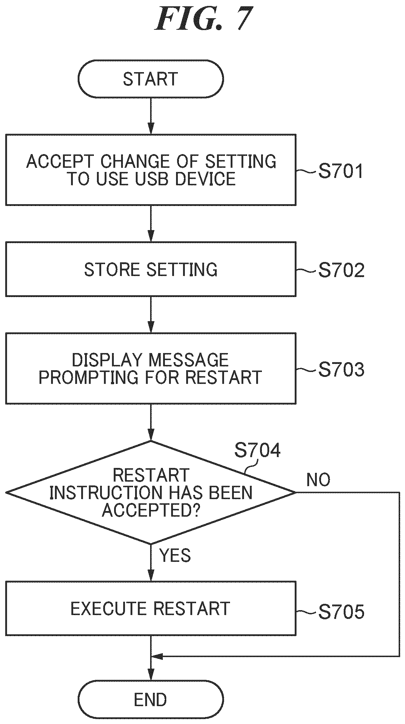

FIG. 7 is a flowchart that shows a processing for switching between enabling and disabling the USB device function on the setting screen shown in FIG. 5. As shown in FIG. 7, in a step S701, the CPU 340 accepts an operation change with respect to the setting 501 of the setting screen 500. This "operation change" refers to changing (switching) from enabled to disabled in the setting 501, or conversely, changing (switching) from disabled to enabled in the setting 501.

In a step S702, the CPU 340 stores, in the storage device, the operation change with respect to the setting 501 that has been accepted in the step S701 (the changed setting value).

In a step S703, the CPU 340 displays a message prompting a restart. This message is displayed, for example, in a region 502 provided below the setting 501 on the setting screen 500. In addition, the user of the image forming apparatus 101 is able to confirm the message displayed in the region 502 and operate a restart button (not shown) that is displayed in the region 502 together with the message.

In a step S704, the CPU 340 determines whether or not the restart button has been operated and an instruction to restart (a restart instruction) has been accepted. As a result of the determination in the step S704, in the case of being determined that a restart instruction has been accepted (YES in the step S704), the processing for switching between enabling and disabling the USB device function on the setting screen proceeds to a step S705. On the other hand, as the result of the determination in the step S704, in the case of being determined that a restart instruction has not been accepted (NO in the step S704), the processing for switching between enabling and disabling the USB device function on the setting screen ends.

In the step S705, the CPU 340 causes the image forming apparatus 101 to restart. By this restart, the image forming apparatus 101 enters a state in which the content of the operation change with respect to the setting 501 of the setting screen 500 has been reflected. For example, in the case that the operation change in the step S701 is changing from enabled to disabled, the image forming apparatus 101 enters a state in which the USB device function is disabled. In addition, in the case that the operation change in the step S701 is changing from disabled to enabled, the image forming apparatus 101 enters a state in which the USB device function is enabled.

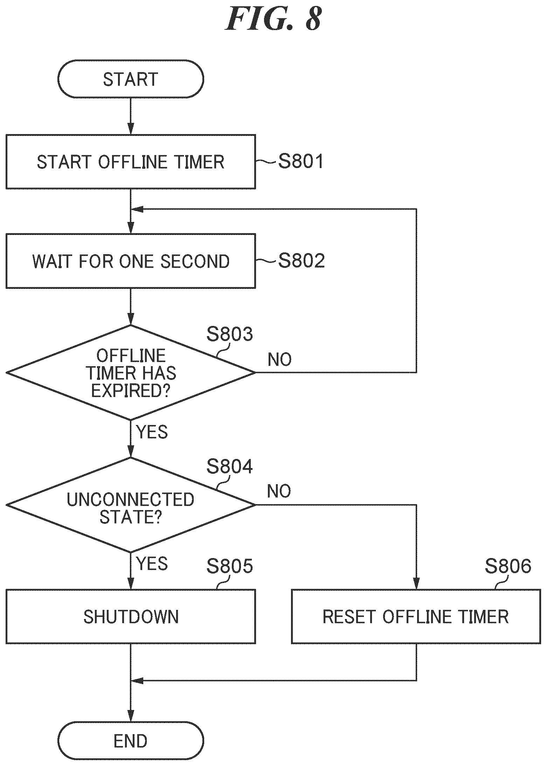

FIG. 8 is a flowchart that shows an offline timer processing for automatically shutting down the image forming apparatus. As shown in FIG. 8, in a step S801, the CPU 340 starts the operation of an offline timer (not shown). It should be noted that the offline timer is built into, for example, the main board 200.

In a step S802, the CPU 340 waits for one second. It should be noted that the waiting time is not limited to one second. After the step S802 is executed, the offline timer processing proceeds to a step S803.

In the step S803, the CPU 340 determines whether or not the offline timer has expired, that is, whether or not the time is up. After the offline timer has expired (YES in the step S803), the offline timer processing proceeds to a step S804.

In the step S804, the CPU 340 controls the USB device controller 210 and the network controller 211 to determine whether the image forming apparatus 101 is in a USB-connected state or a USB-unconnected state (a determining step). "The USB-connected state" refers to a connected state in which the USB host 407 is connected to the USB device I/F 406. "The USB-unconnected state" refers to an unconnected state in which the USB host 407 is not connected to the USB device I/F 406. In this manner, in the present embodiment, the CPU 340 also functions as a determining unit that determines whether the image forming apparatus 101 is in the USB-connected state or the USB-unconnected state. It should be noted that in the image forming apparatus 101, a part functioning as the determining unit may be provided separately from the CPU 340. In addition, when it is determined in the step S804 whether the image forming apparatus 101 is in the USB-connected state or the USB-unconnected state, prior to the determination, waiting for one second (waiting for a predetermined period of time) (the step S802). Then, after one second has elapsed, the determination in the step S804 is made. With such a configuration, for example, the determination in the step S804 is capable of being made stably with a margin of one second. Then, as a result of the determination in the step S804, in the case of being determined that the image forming apparatus 101 is in the USB-connected state (NO in the step S804), the offline timer processing proceeds to a step S806. On the other hand, as the result of the determination in the step S804, in the case of being determined that the image forming apparatus 101 is in the USB-unconnected state (YES in the step S804), the offline timer processing proceeds to a step S805.

In the step S805, the CPU 340 executes a shutdown processing that switches the power state of the image forming apparatus 101 to the shutdown state (the second power state). It should be noted that it is preferable that the shutdown processing in the step S805 is executed after, for example, ten seconds have elapsed (after a predetermined period of time has elapsed) since it is determined in the step S804 that the image forming apparatus 101 is the USB-unconnected state. In this case, for example, a countdown until the shutdown processing is performed is displayed on the operation unit 105. As a result, it is possible to prevent the user from feeling that the image forming apparatus 101 has suddenly entered the shutdown state.

In the step S806, the CPU 340 resets the offline timer. In addition, the CPU 340 switches the power state of the image forming apparatus 101 to the first power state. In this manner, in the present embodiment, the CPU 340 also functions as a power control unit that performs switching control (a power control step) for switching the power state of the image forming apparatus 101 between the first power state and the second power state. It should be noted that in the image forming apparatus 101, a part functioning as the power control unit may be provided separately from the CPU 340.

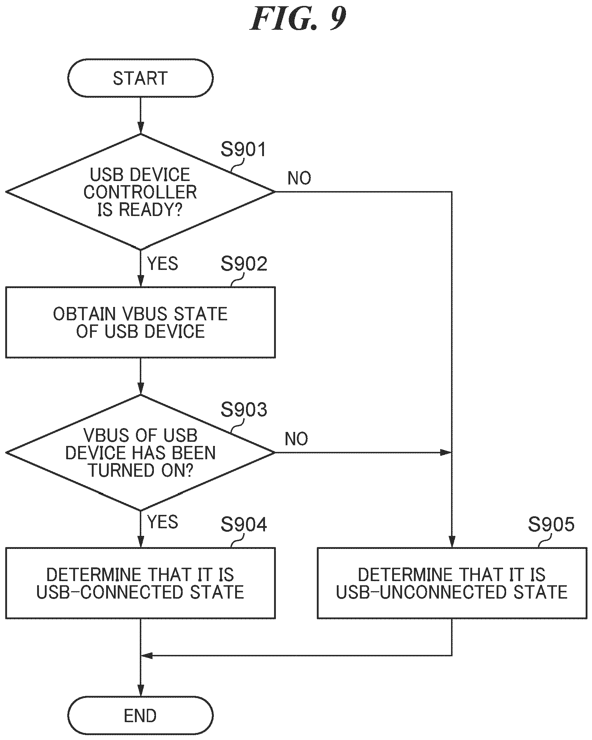

FIG. 9 is a flowchart that shows a detailed process performed in the step S804 of the flowchart shown in FIG. 8. The flowchart shown in FIG. 9 is a flowchart that shows the details of a connection state determination processing for determining whether the image forming apparatus 101 is in the USB-connected state or the USB-unconnected state. As shown in FIG. 9, in a step S901, the CPU 340 determines whether or not the preparation for communication between the USB device controller 210 and the USB host 407 is completed, based on whether or not the flag has been stored in the memory 341 in the step S603. As a result of the determination in the step S901, in the case of being determined that the preparation for communication between the USB device controller 210 and the USB host 407 is completed (YES in the step S901), the connection state determination processing proceeds to a step S902. On the other hand, as the result of the determination in the step S901, in the case of being determined that the preparation for communication between the USB device controller 210 and the USB host 407 is not completed (NO in the step S901), the connection state determination processing proceeds to a step S905. As described above, the setting state on the setting screen 500 (the setting state of the setting 501) has been stored in the storage device. In this case, the determination in the step S901 may be made based on the setting state on the setting screen 500 that has been stored in the storage device.

In the step S902, the CPU 340 obtains information about the state of the VBUS line that has been stored in the setting register 403, that is, obtains information regarding the presence or absence of power supplying from the VBUS line to the USB device controller 210. After the step S902 is executed, the connection state determination processing proceeds to a step S903.

In the step S903, the CPU 340 determines whether or not the VBUS line is in the ON state based on the information about the state of the VBUS line that has been obtained in the step S902. As a result of the determination in the step S903, in the case of being determined that the VBUS line is in the ON state (YES in the step S903), the connection state determination processing proceeds to a step S904. On the other hand, as the result of the determination in the step S903, in the case of being determined that the VBUS line is not in the ON state, that is, the VBUS line is in an OFF state (NO in the step S903), the connection state determination processing proceeds to the step S905.

In the step S904, the CPU 340 determines that the image forming apparatus 101 is in the USB-connected state.

In the step S905, the CPU 340 determines that the image forming apparatus 101 is in the USB-unconnected state.

As described above, in the image forming apparatus 101, based on whether or not the USB host 407 is connected to the USB device controller 210 (the image forming apparatus 101) and the setting state of the setting 501, it is determined whether the image forming apparatus 101 is in the USB-connected state or the USB-unconnected state. Specifically, in the case that the USB host 407 is connected and the use of the USB host 407 in the image forming apparatus 101 becomes possible and enabled has been selected in the setting 501 (YES in the step S901 and YES in the step S903), it is determined that the image forming apparatus 101 is in the USB-connected state. On the other hand, even in the case that the USB host 407 is connected and the use of the USB host 407 in the image forming apparatus 101 becomes possible and when disabled has been selected in the setting 501 (NO in the step S901), it is determined that the image forming apparatus 101 is in the USB-unconnected state. In this manner, in the case that disabled has been selected in the setting 501, the determination of the presence or absence of power supplying to the USB device controller 210 (the USB host 407) (the step S903) is omitted (skipped), and it is determined that the image forming apparatus 101 is in the USB-unconnected state. In addition, also in the case that enabled has been selected in the setting 501 but the USB host 407 is not currently connected to the image forming apparatus 101 (YES in the step S901 and NO in the step S903), it is determined that the image forming apparatus 101 is in the USB-unconnected state.

In the image forming apparatus 101, for example, in the case that there is no intention to use the USB host 407 even though the USB host 407 is connected, it is determined that the image forming apparatus 101 is in the USB-unconnected state. As a result, it is possible to supply power to the USB host 407, and accordingly, it is possible to suppress the waste of the power consumption. Therefore, in the image forming apparatus 101, it is possible to suppress the power consumption in the image forming apparatus 101 depending on whether or not the USB host 407 is connected and the setting state of the setting 501, that is, according to the usage state of the image forming apparatus 101.

In addition, in the embodiment described above, an apparatus to which the information processing apparatus can be applied is an image forming apparatus, but is not limited to be an image forming apparatus and may be, for example, a desktop type or notebook type personal computer, a tablet terminal, a smartphone, or the like.

The disclosure of the present embodiment includes the following configurations, method, and program.
(Configuration 1) An information processing apparatus that is able to be in a first power state in which the information processing apparatus is supplied with power and is operated and a second power state in which power consumption is lower than that of the first power state,
   the information processing apparatus, to which a USB device is attachably and detachably connected, comprising:
   a power control means for performing switching control for switching between the first power state and the second power state;
   an operation means by which a selection operation that selects enabling use of the USB device in the information processing apparatus or disabling the use of the USB device in the information processing apparatus is performed; and
   a determining means for determining whether the information processing apparatus is in a connected state in which the USB device is connected or in an unconnected state in which the USB device is not connected, and
   wherein the determining means, even in a case that the USB device is connected to the information processing apparatus and the use of the USB device in the information processing apparatus becomes possible and when the disabling has been selected by the operation means, determines that the information processing apparatus is in the unconnected state, and
   the power control means, in a case of being determined by the determining means that the information processing apparatus is in the unconnected state, switches to the second power state.
(Configuration 2) The information processing apparatus according to configuration 1, wherein
   the determining means, in a case that the USB device is not currently connected to the information processing apparatus, determines that the information processing apparatus is in the unconnected state.
(Configuration 3) The information processing apparatus according to configuration 1, wherein
   the power control means, after a predetermined period of time has elapsed since it is determined by the determining means that the information processing apparatus is in the unconnected state, switches to the second power state.
(Configuration 4) The information processing apparatus according to configuration 1 or 2, wherein
   the determining means, in a case that the USB device is connected to the information processing apparatus and the use of the USB device in the information processing apparatus becomes possible and the enabling has been selected by the operation means, determines that the information processing apparatus is in the connected state.
(Configuration 5) The information processing apparatus according to configuration 4, wherein
   the power control means, in a case of being determined by the determining means that the information processing apparatus is in the connected state, switches to the first power state.
(Configuration 6) The information processing apparatus according to any one of configurations 1 to 5, wherein
   when the determining means determines whether the information processing apparatus is in the connected state or in the unconnected state, prior to the determination, the determining means waits for a predetermined period of time.
(Configuration 7) The information processing apparatus according to configuration 6, wherein
   the determining means, after the predetermined period of time has elapsed, determines whether the information processing apparatus is in the connected state or in the unconnected state.
(Configuration 8) The information processing apparatus according to any one of configurations 1 to 7, wherein
   the determining means is capable of determining presence or absence of power supplying to the USB device.
(Configuration 9) The information processing apparatus according to configuration 8, wherein
   the determining means, in a case that the disabling has been selected by the operation means, omits the determination of the presence or absence of power supplying to the USB device, and determines that the information processing apparatus is in the unconnected state.
(Configuration 10) The information processing apparatus according to configuration 8, wherein
   the determining means, in a case that the enabling has been selected by the operation means and it is determined that no power is supplied to the USB device, determines that the information processing apparatus is in the unconnected state.
(Configuration 11) The information processing apparatus according to any one of configurations 1 to 10, further comprising:
   an information generating means for, in a case that the enabling has been selected by the operation means, generating information indicating that the use of the USB device in the information processing apparatus is possible, and
   wherein the determining means, based on the information generated by the information generating means, determines that the use of the USB device in the information processing apparatus is possible.
(Configuration 12) The information processing apparatus according to any one of configurations 1 to 11, further comprising:
   a display means for being capable of displaying a screen, and
   wherein the operation means is displayed on the display means as an operation screen on which the selection operation is performed.
(Configuration 13) The information processing apparatus according to any one of configurations 1 to 12, wherein
   the second power state is a shutdown state.
(Configuration 14) The information processing apparatus according to any one of configurations 1 to 13, wherein
   the information processing apparatus is an image forming apparatus.
(Method 1) A control method for controlling an information processing apparatus that is able to be in a first power state in which the information processing apparatus is supplied with power and is operated and a second power state in which power consumption is lower than that of the first power state, the information processing apparatus, to which a USB device is attachably and detachably connected,
   the control method comprising:
   a power control step of performing switching control for switching between the first power state and the second power state;
   an operation step in which a selection operation that selects enabling use of the USB device in the information processing apparatus or disabling the use of the USB device in the information processing apparatus is performed; and
   a determining step of determining whether the information processing apparatus is in a connected state in which the USB device is connected or in an unconnected state in which the USB device is not connected, and
   wherein in the determining step, even in a case that the USB device is connected to the information processing apparatus and the use of the USB device in the information processing apparatus becomes possible and when the disabling has been selected in the operation step, it is determined that the information processing apparatus is in the unconnected state, and
   in the power control step, in a case of being determined in the determining step that the information processing apparatus is in the unconnected state, it is switched to the second power state.
(Program 1) A program for causing a computer to execute each of the means of the information processing apparatus according to any one of configurations 1 to 14.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to example embodiments, it is to be understood that the invention is not limited to the disclosed example embodiments. The scope of the following claims is to be accorded the broadest interpretation so as to encompass all such modifications and equivalent structures and functions.

This application claims the benefit of Japanese Patent Application No. 2024-031146, filed on March 1, 2024.

## Claims

1. An information processing apparatus (101) which is configurable in a first power state in which the information processing apparatus is supplied with power, and a second power state in which power consumption is lower than that of the first power state, wherein the information processing apparatus, to which a USB device (407) is attachably and detachably connected, comprises:
a power control means (340) for switching between the first power state and the second power state;
an operation means (500) for performing a selection operation that selects enabling the use of the USB device by the information processing apparatus or disabling the use of the USB device by the information processing apparatus; and
a determining means (340) for determining whether the information processing apparatus is in a connected state in which the USB device is connected to the information processing apparatus, or in an unconnected state in which the USB device is not connected to the information processing apparatus, and
wherein the determining means is configured, in a case where the USB device is connected to the information processing apparatus and the use of the USB device by the information processing apparatus is possible and disabling the use of the USB device has been selected by the operation means, to determine that the information processing apparatus is in the unconnected state, and
the power control means is configured, in a case where the determining means determines that the information processing apparatus is in the unconnected state, to switch to the second power state.

2. The information processing apparatus according to claim 1, wherein the determining means is configured, in a case where the USB device is not currently connected to the information processing apparatus, to determine that the information processing apparatus is in the unconnected state.

3. The information processing apparatus according to claim 1, wherein the power control means is configured, after a predetermined period of time has elapsed since it is determined by the determining means that the information processing apparatus is in the unconnected state, to switch to the second power state.

4. The information processing apparatus according to claim 1 or 2, wherein the determining means is configured, in a case where the USB device is connected to the information processing apparatus so that the use of the USB device by the information processing apparatus is possible and enabling use of the USB device has been selected by the operation means, to determine that the information processing apparatus is in the connected state.

5. The information processing apparatus according to claim 4, wherein the power control means is configured, in a case where the determining means determines that the information processing apparatus is in the connected state, to switch to the first power state.

6. The information processing apparatus according to any one of claims 1 to 5, wherein, when determining whether the information processing apparatus is in the connected state or in the unconnected state, prior to the determination, the determining means is configured to wait for a predetermined period of time.

7. The information processing apparatus according to claim 6, wherein the determining means is configured, after the predetermined period of time has elapsed, to determine whether the information processing apparatus is in the connected state or in the unconnected state.

8. The information processing apparatus according to any one of claims 1 to 7, wherein the determining means is capable of determining the presence or absence of power being supplied to the USB device.

9. The information processing apparatus according to claim 8, wherein the determining means is configured, in a case where disabling the use of the USB device has been selected by the operation means, to omit the determination of the presence or absence of power being supplied to the USB device, and determine that the information processing apparatus is in the unconnected state.

10. The information processing apparatus according to claim 8, wherein the determining means is configured, in a case where enabling the use of the USB device has been selected by the operation means and it is determined that no power is supplied to the USB device, to determine that the information processing apparatus is in the unconnected state.

11. The information processing apparatus according to any one of claims 1 to 10, further comprising:
an information generating means (340) for, in a case where enabling use of the USB device has been selected by the operation means, generate information indicating that use of the USB device by the information processing apparatus is possible, and
wherein the determining means is configured, based on the information generated by the information generating means, to determine that use of the USB device by the information processing apparatus is possible.

12. The information processing apparatus according to any one of claims 1 to 11, further comprising:
a display means (105) for displaying a screen, and
wherein the operation means is displayed on the display means as an operation screen on which the selection operation is performed.

13. The information processing apparatus according to any one of claims 1 to 12, wherein the second power state is a shutdown state.

14. The information processing apparatus according to any one of claims 1 to 13, wherein the information processing apparatus is an image forming apparatus (101).

15. A control method for controlling an information processing apparatus that is configurable in a first power state in which the information processing apparatus is supplied with power and a second power state in which power consumption is lower than that of the first power state, wherein the information processing apparatus is configured to be attachably and detachably connected to a USB device, the control method comprising:
a power control step of performing switching control for switching between the first power state and the second power state;
an operation step for performing a selection operation that selects enabling the use of the USB device by the information processing apparatus or disabling the use of the USB device by the information processing apparatus; and
a determining step for determining whether the information processing apparatus is in a connected state in which the USB device is connected to the information processing apparatus or in an unconnected state in which the USB device is not connected to the information processing apparatus, and
wherein in the determining step, in a case where the USB device is connected to the information processing apparatus and use of the USB device by the information processing apparatus is possible and disabling the use of the USB device has been selected in the operation step, it is determined that the information processing apparatus is in the unconnected state, and
in the power control step, in a case where the determining step determines that the information processing apparatus is in the unconnected state, it is switched to the second power state.

16. A non-transitory computer-readable storage medium storing a program for causing a computer to execute a control method for controlling an information processing apparatus that is configurable in a first power state in which the information processing apparatus is supplied with power and a second power state in which power consumption is lower than that of the first power state, wherein the information processing apparatus is configured to be attachably and detachably connected to a USB device, the control method comprising:
a power control step of performing switching control for switching between the first power state and the second power state;
an operation step for performing a selection operation that selects enabling the use of the USB device by the information processing apparatus or disabling the use of the USB device by the information processing apparatus; and
a determining step of determining whether the information processing apparatus is in a connected state in which the USB device is connected to the information processing apparatus or in an unconnected state in which the USB device is not connected to the information processing apparatus, and
wherein in the determining step, in a case where the USB device is connected to the information processing apparatus and use of the USB device by the information processing apparatus is possible and disabling the use of the USB device has been selected in the operation step, it is determined that the information processing apparatus is in the unconnected state, and
in the power control step, in a case where the determining step determines that the information processing apparatus is in the unconnected state, it is switched to the second power state.

17. A computer program product including a program for causing a computer to execute a control method for controlling an information processing apparatus configurable in a first power state in which the information processing apparatus is supplied with power and a second power state in which power consumption is lower than that of the first power state, wherein the information processing apparatus is configured to be attachably and detachably connected to a USB device, the control method comprising:
a power control step of performing switching control for switching between the first power state and the second power state;
an operation step for performing a selection operation that selects enabling the use of the USB device in the information processing apparatus or disabling the use of the USB device in the information processing apparatus; and
a determining step of determining whether the information processing apparatus is in a connected state in which the USB device is connected to the information processing apparatus or in an unconnected state in which the USB device is not connected to the information processing apparatus, and
wherein in the determining step, in a case where the USB device is connected to the information processing apparatus and use of the USB device by the information processing apparatus is possible and disabling the USB device has been selected in the operation step, it is determined that the information processing apparatus is in the unconnected state, and
in the power control step, in a case where the determining step determines that the information processing apparatus is in the unconnected state, it is switched to the second power state.
